# EUROPEAN PATENT SPECIFICATION

(11) **EP 1 379 617 B1**
(45) Date of publication and mention of the grant of the patent: **13.12.2006**
(21) Application number: 02721461.8
(22) Date of filing: 18.03.2002
(51) Int. Cl.: C10M 157/00

(54) **PROCESS FOR LUBRICATING A DRIVELINE USING LUBRICANTS CONTAINING OLEFIN COPOLYMER AND ACRYLATE COPOLYMER**
VERFAHREN ZUM SCHMIEREN EINES ANTRIEBS MITTELS SCHMIERMITTEL ENTHALTEND OLEFIN-COPOLYMERE UND ACRYLAT-COPOLYMERE
PROCEDE DE LUBRIFICATION DE TRANSMISSIONS AVEC DES LUBRIFIANTS CONTENANT UN COPOLYMERE OLEFINIQUE ET UN COPOLYMERE D'ACRYLATE

(30) Priority: 11.04.2001 US 282988 P
(43) Date of publication of application: 14.01.2004
(73) Proprietor: The Lubrizol Corporation, Wickliffe, Ohio 44092-2298 (US)
(72) Inventor: VINCI, James, N., Mayfield Heights, OH 44124 (US); TIPTON, Craig, D., Perry, OH 44081 (US); CAIN, Robert, W., Lyndhurst, OH 44124 (US)
(74) Representative: Mallalieu, Catherine Louise
(86) International application number: PCT/US2002/008305
(87) International publication number: WO 2002/083825

(56) References cited:
- EP-A- 0 280 260
- EP-A- 0 644 252
- GB-A- 1 525 402
- US-A- 4 922 046
- US-A- 5 108 635
- US-A- 5 188 770

## Description

### CROSS REFERENCE TO RELATED APPLICATIONS

This application claims priority from United States Provisional patent application Serial No. 60/282,988 filed April 11, 2001.

### FIELD OF THE INVENTION

This invention is directed to a method of lubricating a driveline using a lubricating oil composition comprising polyolefins and polyacrylates. These lubricating oil compositions display good low temperature and shear performance in driveline lubricants and provide improved efficiency without sacrificing durability under severe loading conditions.

### BACKGROUND OF THE INVENTION

When a fluid is subjected to external forces, it resists flow due to internal friction. Viscosity is a measure of this internal friction.

The viscosity of oils of lubricating viscosity is generally dependent upon temperature. As the temperature of the oil is increased, the viscosity usually decreases, and as the temperature is reduced, the viscosity usually increases.

The function of a viscosity improver is to reduce the extent of the decrease in viscosity as the temperature is raised or to reduce the extent of the increase in viscosity as the temperature is lowered, or both. Thus, a viscosity improver ameliorates the change of viscosity of an oil containing it with changes in temperature. The fluidity characteristics of the oil are improved.

Viscosity improvers are usually polymeric materials and are often referred to as viscosity index improvers.

It is desirable that viscosity improvers not adversely affect the low-temperature viscosity of the lubricant containing same. Frequently, while viscosity improvers enhance the high temperature viscosity characteristics of lubricating oil, that is, they reduce the loss of viscosity with increasing temperature, low temperature properties of the treated lubricant become worse. It is also desirable that viscosity improving agents provide relatively constant fluidity characteristics under extended periods of use. Such materials usually are polymers that resist shearing.

While many lubricating oil compositions can benefit from the use of viscosity improvers, gear lubricants and automatic transmission fluids are particularly sensitive to viscosity.

Gear lubricants are subjected to high levels of shearing under use. While many conventional viscosity improving agents provide lubricants with exemplary viscosity characteristics when first prepared, after a short period of use lubricating a gear set, such as in an automobile or truck axle or transmission, the viscosity improving agent undergoes shearing, resulting in reduced viscosity improving properties. The loss of viscosity with shearing is a permanent loss. That is, the lost viscosity cannot be recovered by ordinary physical means. The effectiveness at high and low temperature is reduced.

Gear lubricants also preferably have good low temperature viscosity characteristics.

In automatic transmission fluids (ATF) and other driveline lubricants and crankcase lubricants, viscosity modifiers are often used to improve relative low and high temperature characteristics. In ATF the requirements are currently for viscosity at -40°C to be in the range of 7,000 to 20,000 centipoise (cP) and kinematic viscosity at 100°C ranging from about 6.5 to about 8.5 centistokes (cSt). More recently, especially for factory fill requirements, shear stability has been included as a performance requirement. A further goal is to reduce treatment levels of viscosity modifiers, providing both a cost benefit and a performance benefit.

Other lubricating oil compositions that can benefit from this invention include hydraulic fluids, for example farm tractor fluids, industrial hydraulic application fluids and the like, lubricants for continuously variable transmissions (CVT), for example push-belt and chain drive CVT, dual clutch transmissions, manual transmissions, and others where viscosity characteristics of the lubricant are particularly important.

The United States Environmental Protection Agency has instituted stringent automobile-related environmental regulations. A primary focus of the regulations relates to Corporate Average Fuel Economy (CAFE) standards, which mandate a specified, gradual increase of a corporate fleet's overall fuel economy by established target dates. The effort to increase fuel economy has become paramount in the wake of the Environmental Protection Agency's (EPA) tightening CAFE standards.

CAFE standards have spurred industry wide research and development of engines and lubricants therefor. More recently, the effect of driveline components on fuel economy has become of increased interest.

In particular, the effect of axle efficiency on fuel economy has been given increased attention. Multigraded gear oils, such as SAE 75W-140 grade axle oils provide outstanding durability, resulting in operating temperature reduction and extended axle life under conditions of severe duty. These lubricants are generally recommended for use in axles of the highly popular light trucks and sport utility vehicles (SUV) presently on the market. However, the higher viscosities historically required for axle lubricants for more heavily loaded SUV and light truck applications are not consistent with currently mandated CAFE targets for improved fuel economy.

Lighter viscosity grades are more appropriate for energy efficiency because of reduced frictional 'drag' and greater accessibility to critical moving parts. For example, a commercially available SAE 75W-90 synthetic gear oil provides good fuel economy but lacks durability for severe service such as trailer towing.

It is well known to those skilled in the art that components which may provide a benefit in one aspect may seriously degrade performance of another aspect. Frequently, this arises from an adverse interaction between different components in a lubricating oil composition. The challenge here is to build both durability and energy efficiency into a single lubricating composition without compromising critical areas such as scoring protection, bearing fatigue, seal integrity and corrosion resistance.

Traditionally, for the formulator of ATF, continuously variable transmissions (CVT), traction drive and other driveline lubricants, research and formulating has centered around the design and or selection of a viscosity modifier with the best combination of attributes. Some patents exist relating to combinations of viscosity improvers which are said to provide special benefits.

In U.S. Patent 4,594,378, and U.S. Patents 4,654,403 and 4,734,446 which are divisionals of U.S. Patent 4,594,378, polymeric compositions useful as additives in transmission fluids and hydraulic fluids are described which comprise a mixture of (A) at least one oil-soluble polymer which is a homopolymer of a non-aromatic monoolefin or a copolymer of said non-aromatic monoolefin with an aromatic monoolefin, and (B-1) at least one nitrogen-containing ester of a carboxy-containing interpolymer, and/or (B-2) at least one oil-soluble acrylate polymerization product of at least one acrylate ester, or a mixture of one or more of (B-1) and (B-2), and the transmission fluids and hydraulic fluids containing the polymeric compositions are said to exhibit improved shear stability while maintaining desirable high and low temperature viscosity characteristics. The polymeric compositions also may contain (C) an effective amount of at least one low temperature viscosity-reducing liquid organic diluent such as a naphthenic oil or certain other natural and synthetic oils having the desired low temperature properties.

U.S. Patent 5,108,635 relates to a composition of matter, particularly useful as a viscosity additive, based on an olefin copolymer and a polyalkyl methacrylate in diluent oil solution, which composition comprises from 6 to 15 parts by weight of at least one ethylene-propylene copolymer having a weight-average molecular mass ranging from approximately 155,000 to approximately 250,000, and exhibiting an ethylene/propylene weight ratio ranging from 60/40 to 54/46, from 2 to 8 parts by weight of at least one poly(C₁₋₂₀ alkyl methacrylate), ungrafted or grafted with 1 to 8% of its weight of a dispersant monomer, the polymethacrylate having a weight-average molecular mass ranging from 30,000 to 150,000, the ungrafted or grafted polymethacrylate/ethylene-propylene copolymer weight ratio ranging from 1/5 to 1/1, and the complement to 100 parts by weight of diluent oil.

U.S. Patent 5,883,057 relates to a lubricating composition comprising at least about 30% by weight of at least one mineral oil, having a kinematic viscosity of less than about 8 cSt at 100°C., (A) from about 5% to about 30% by weight at least one polymer having an M̅_{w} less than about 10,000, and (B) from about 2% to about 12% by weight of a polymer having a M̅_{w} greater than about 15,000, wherein the lubricating composition has a shear loss of less than about 15% in the 20 hour taper bearing shear test. In one aspect, the lubricating compositions may also include (C) from about 5% to about 30% by weight of at least one fluidizing agent. The patent also relates to concentrates used in preparing shear stable lubricating compositions. The combination of components is said to provide good low and high temperature properties to mineral oils, even at high treat levels. The lubricants have good shear stability and in one aspect have improved oxidation resistance.

U.S. Patent 5,821,313 is directed to a process for preparing a nitrogen containing copolymer, the copolymers and lubricating oil compositions containing the copolymers. The process comprises reacting, in the presence of a free radical initiator, (A) from about 55% to about 99.9% by weight of one or more alkyl acrylate ester monomers containing from 1 to about 24 carbon atoms in the ester alkyl group, wherein at least about 50 mole % of the esters contain at least 6 carbon atoms in the ester alkyl group, and (B) from about 0.1% to about 45% by weight of at least one nitrogen containing monomer selected from the group consisting of vinyl substituted nitrogen heterocyclic monomers, dialkylaminoalkyl acrylate monomers, dialkylaminoalkyl acrylamide monomers, N-tertiary alkyl acrylamides, and vinyl substituted amines provided that the total of (A) and (B) equals 100%, and optionally, in the presence of a chain transfer agent, wherein monomer (A), the free radical initiator, and if used, the chain transfer agent, are first combined to form a mixture, whereupon from about 10% to about 80% of said mixture is mixed with monomer (B); from about 20% to about 100% of the mixture of monomers (A) and (B) is heated until an exotherm is noted, then while maintaining reaction temperature, first adding the balance, if any, of the mixture of monomers (A) and (B), over about 0.25 hour to about 5 hours followed by addition over 0.25 to about 5 hours of the remaining mixture of monomer (A) and initiator, optionally adding additional initiator, whereupon the reaction is continued to completion.

U.S. Patent 6,124,249 describes a copolymer comprising units derived from (a) methacrylic acid esters containing from about 9 to about 25 carbon atoms in the ester group and (b) methacrylic acid esters containing from 7 to about 12 carbon atoms in the ester group, said ester groups having 2-(C₁₋₄ alkyl)-substituents, and optionally (c) at least one monomer selected from the group consisting of methacrylic acid esters containing from 2 to about 8 carbon atoms in the ester group and which are different from methacrylic acid esters (a) and (b), vinyl aromatic compounds, and nitrogen-containing vinyl monomers, with the proviso that no more than 60% by weight of the esters contain not more than 11 carbon atoms in the ester group.

PCT Publication WO 00/71646 describes mineral oil based gear oils and transmission fluids which comprise a major amount of a mineral oil having an iodine number of less than 9 and where at least 55 % of the saturates are aliphatic, and gear oil or transmission fluid additives. In one embodiment, the invention relates to a gear oil or transmission fluid composition comprising a major amount of lubricant basestock and at least one functional additive wherein a major amount of the lubricant basestock comprises a mineral oil having an iodine number of less than 9 and comprising at least 45 % by weight of aliphatic saturates. These gear oils and transmission fluids have good viscosity and oxidation properties.

EP 0 644 252 discloses a compatibilizer for stabilizing viscosity index improving blend of a poly(meth)acrylate copolymer and a polyolefin copolymer.

US 4 922 046 discloses a liquid polymer composition having excellent lubrication characteristics which comprises low molecular weight ethylene-propylene copolymer and a high molecular weight polymer which may be a (meth)acrylate type polymer.

### SUMMARY OF THE INVENTION

The present invention relates to a method of lubricating a driveline using a lubricating oil composition comprising an oil of lubricating viscosity and a total of from 1 to 50% by weight of copolymers comprising
(A) at least one ethylene-aliphatic olefin copolymer wherein the aliphatic olefins contain from 3 to 24 carbon atoms, said copolymer (A) having M̅ₙ ranging from 600 to 5000;and
(B) at least one copolymer comprising units derived from
   (a) 35 mole % to 95 mole % of alkyl methacrylate ester monomers containing from 9 to 25 carbon atoms in the ester group and
   b) 65 mole % to 5 mole % of alkyl methacrylate ester monomers containing from 7 to 12 carbon atoms in the ester group and wherein the alkyl moieties of the ester groups of alkyl methacrylate ester monomer (b) have 2-(C₁₋₄ alkyl) substituents,
said copolymer (B) having M̅ₙ ranging from 10,000 to 350,000; wherein the weight ratio of (A):(B) ranges from 99:1 to 1:99.

### DETAILED DESCRIPTION OF THE PREFERRED EMBODIMENTS

The above combination of polymers are useful in lubricants where they can be used in automatic of manual transmission fluids, transaxle lubricants, gear lubricants, both for open and enclosed systems and tractor lubricants.

The lubricants of the present invention include automatic transmission, manual transmission and gear lubricants. The transmission lubricants include those that meet the General Motors DEXRON^{®} III and Ford MERCON^{®} and MERCON^{®} V automatic transmission fluid requirements. In one embodiment, the lubricants include heavy duty or off road transmissions such as those meeting the Allison C-4 specification. In another embodiment, the lubricants are gear lubricants and include GL4 and GL5 lubricants. Additionally, in another embodiment, the lubricants are MT-1 lubricants.

As described herein, the present invention relates to lubricating oil compositions, and particularly gear oil and transmission fluid compositions, which comprise an oil of lubricating viscosity. The oil of lubricating viscosity may be a singular component or may be a combination of components to be combined with functional additives. In one embodiment, the basestock comprises a major amount of the mineral oils discussed below. The minority of the basestock may be composed of other mineral oils or polyalphaolefins. The lubricating oil compositions of this invention, may additionally contain at least one functional additive. The functional additive adds an additional characteristic to the compositions in addition to those properties provided by the oil of lubricating viscosity. Examples of such functions include antiwear, extreme pressure, antioxidancy, friction modification, etc.

Lubricating compositions are often subjected to high shear conditions. Lubricating oils containing a polymer can experience shearing of the polymer, resulting in reduction of viscosity improving properties. Accordingly, shear stability of polymer containing lubricating oils is frequently important.

As described herein, a particularly effective combination of viscosity modifying polymers has been discovered that provides unexpectedly good performance on low temperature viscosity and shear stability in a wide variety of lubricating applications as well as excellent performance under conditions of severe duty such as in axles of light trucks and SUV. while still providing satisfactory fuel efficiency. At the same time, compared to treatment with a single viscosity improver, the combination also allows a substantial, often as much as 30-50%, reduction in viscosity modifier treatment levels resulting in improved formulation economics.

As noted hereinabove and discussed in greater detail hereinafter, the compositions of this invention comprise particular ethylene- aliphatic olefin copolymers and particular copolymers of alkyl acrylate ester monomers.

As noted herein, lubricating oil compositions displaying good viscosity control and shear stability are desired.

Another property of interest is traction. Traction is essentially a measure of the internal resistance of a fluid to flow. It is a physical property related to the bulk fluid and is manifested under full fluid film lubrication. As defined herein, traction is a function of the fluid's molecular structure. Performance additives which activate under boundary or mixed-film conditions where various degrees of metal-to-metal contact occur don't significantly contribute to the tractive effect.

Traction properties of fluids and thickeners are among indicators of operating temperatures that might be encountered in gear and transmission oils where constant churning generates frictional heat. Traction properties play a role in the losses incurred directly by the fluid, especially in lightly loaded situations. In a heavily loaded situation, a low traction coefficient fluid would be expected to run at a lower temperature than one with a higher traction coefficient.

For a given fluid at a constant temperature, a profile of traction coefficient versus slide-to-roll ratio can be determined employing a commercially available test rig known as the Mini-Traction Machine (MTM) available from PCS Instruments, London, U.K., an apparatus wherein a highly polished steel ball bearing is loaded against a highly polished steel disc. Both the ball and disc are rotated in relative motion against each other while the velocity of each element is independently controlled. A desired amount of slip is introduced at the interface under different rolling velocities. Traction behavior of fluids can be compared by superimposing their traction profiles; alternatively, traction coefficients can be compared at given slide-roll ratios.

Synthetic basestocks, particularly poly-alphaolefin oils and American Petroleum Institute (API) Group III oils, described in greater detail elsewhere herein, are known to have lower traction coefficients compared to API Group I and Group II mineral oils. For gear oil applications, it is particularly preferred to employ low traction coefficient fluids as the oil of lubricating viscosity.

As noted hereinabove, axle durability equates to reduced operating temperatures under high torque conditions such as trailer towing.

One way to measure axle durability is to employ a test rig designed to apply multiple stages of loading and speed, such as (1) high load-low speed simulating trailer tow start up; (2) moderate loading at high speed; (3) moderate load-moderate to high speed simulating cruise conditions, (4) moderate to high load at somewhat reduced speed also simulating cruise conditions, and (5) further increased load with further reduction in speed simulating uphill travel, wherein these conditions simulate a variety of trailer towing conditions. Key pieces of information obtained from the evaluation are stabilized operating temperature of the lubricant and average efficiency under various test stages.

Actual fuel economy performance is conducted employing the EPA 55/45 cycle set out in Title 40, Code of Federal Regulations, based on the assumption of typical use pattern of 55% city driving and 45% highway driving..

As used herein, the terms "hydrocarbyl" and "hydrocarbon based" mean that the group being described has predominantly hydrocarbon character within the context of this invention. These include groups that are purely hydrocarbon in nature, that is, they contain only carbon and hydrogen. They may also include groups containing substituents or atoms which do not alter the predominantly hydrocarbon character of the group. Such substituents may include halo-, alkoxy-, nitro-, etc. These groups also may contain hetero atoms. Suitable hetero atoms will be apparent to those skilled in the art and include, for example, sulfur, nitrogen and oxygen. Therefore, while remaining predominantly hydrocarbon in character within the context of this invention, these groups may contain atoms other than carbon present in a chain or ring otherwise composed of carbon atoms provided that they do not adversely affect reactivity or utility of the process or products of this invention,

In general, no more than about three non-hydrocarbon substituents or hetero atoms, and preferably no more than one, will be present for every 10 carbon atoms in the hydrocarbon or hydrocarbon based groups. Most preferably, the groups are purely hydrocarbon in nature, that is, they are essentially free of atoms other than carbon and hydrogen.

Throughout the specification and claims the expression oil soluble or dispersible is used. By oil soluble or dispersible is meant that an amount needed to provide the desired level of activity or performance can be incorporated by being dissolved, dispersed or suspended in an oil of lubricating viscosity. Usually, this means that at least about 0.001% by weight of the material can be incorporated into a lubricating oil. For a further discussion of the terms oil soluble and dispersible, particularly "stably dispersible", see U.S. Patent 4,320,019 for relevant teachings in this regard.

The expression "lower" is used throughout the specification and claims. As used herein to describe various groups, the expression "lower" is intended to mean groups containing no more than 7 carbon atoms, more often, no more than 4, frequently one or two carbon atoms.

It must be noted that as used in this specification and appended claims, the singular forms also include the plural unless the context clearly dictates otherwise. Thus the singular forms "a", "an", and "the" include the plural; for example "a monomer" includes mixtures of monomers of the same type. As another example, the singular form "monomer" is intended to include both singular and plural unless the context clearly indicates otherwise.

In the context of this invention the term "copolymer" means a polymer derived from two or more different monomers. Thus, a polymer derived from a mixture of, for example, 2 or more of methyl-, butyl-, heptyl-, nonyl-, decyl-, etc. methacrylates is a copolymer as defined herein. Likewise a polymer derived from one of C₉₋₁₁-, and C₁₂₋₁₈- methacrylates, or a polymer having two or more distinct blocks, is a copolymer as defined herein. The copolymers of this invention also may contain units derived from nitrogen-containing monomers.

The expression viscosity index (often abbreviated VI), is frequently used herein. Viscosity index is an empirical number indicating the degree of change in viscosity within a given temperature range. A high VI signifies an oil that displays a relatively small change in viscosity with temperature.

The copolymers of this invention may be prepared in the presence of a diluent. A diluent may also be added to a substantially diluent-free copolymer, usually by dissolving or dispersing the substantially diluent-free polymer in an appropriate diluent. In another embodiment, an additional diluent, often a higher boiling diluent such as an oil, may be added to a copolymer which was prepared in, and still contains, a lower boiling diluent which is then removed by common methods such as distillation. Preferably, when the polymer is prepared in the presence of a diluent, the diluent is an oil.

In one embodiment, the diluent is a mineral oil. In a particular embodiment the mineral oil consists essentially of hydrotreated naphthenic oil. Also contemplated are hydrodewaxed mineral oils. The diluent may also be a synthetic oil. Common synthetic oils are ester type oils, polyolefin oligomers or alkylated benzenes.

The expression "substantially inert" is often used in reference to diluents. When used in this context, "substantially inert" means the diluent is essentially inert with respect to any reactants or compositions of this invention, that is, it will not, under ordinary circumstances, undergo any significant reaction with any reactant or composition, nor will it interfere with any reaction or composition of this invention.

### (A) Copolymer of Aliphatic Olefins

Copolymer (A) comprises at least one ethylene-aliphatic olefin copolymer wherein the aliphatic olefins, preferably alpha olefins, contain from 3 to about 24 carbon atoms, said copolymer having M̅ₙ ranging from about 600 to about 5000, preferably from about 800 to about 4000 and more preferably from about 2000 to about 4000 and polydispersity values (M̅_{w}/M̅ₙ) ranging from about 1.1 to about 3, more often from about 1.3 to about 2.5, and frequently from about 2.0 to about 2.4.

In one embodiment, the copolymer comprises an ethylene-alpha olefin copolymer. In one typical embodiment, the ethylene content of the copolymer ranges from about 30 mole % to about 85 mole %, often from about 45 to about 55 mole %. Preferably, the copolymer is an ethylene-propylent copolymer.

In one preferred embodiment, the copolymer is an ethylene-propylene copolymer wherein the ethylene content ranges from about 40 mole % to about 85 mole %, more often from about 45 to about 55 mole %. These are commercially available, for example as LUCANT(TM) Hydrocarbon-Based Synthetic Oil marketed by Mitsui Petrochemicals (America) Ltd., New York, NY. USA.

Copolymer (A) can be formed by copolymerization of ethylene and one or more aliphatic olefins under conditions known in the art. Examples include polymerizations conducted using Ziegler-Natta or metallocene catalysts.

### (B) Acrylate Ester Copolymers

Copolymer (B) comprises an acrylate copolymer. Included within the definition of 'actylate copolymers' are esters of acrylic acids, and the corresponding alkacrylic-, especially methacrylic-, compounds, particularly alkyl methacrylates, at least one copolymer comprising units derived from alkyl acrylate ester monomers containing from 2 to about 25 carbon atoms in the ester group, and optionally, from about 0.1% to about 20% by weight of at least one member of the group consisting of vinyl aromatic monomers and nitrogen-containing vinyl monomers, said copolymer (B) having M̅ₙ ranging from about 10,000 to about 350,000, wherein the weight ratio of (A):(B) ranges from about 99:1 to about 1:99 and preferably from about 25:75 to about 75:25.

In reference to the size of the ester groups, it is pointed out that an ester group is represented by the formula

-C(O)(OR)

and that the number of carbon atoms in an ester group is the combined total of the carbon atom of the carbonyl group and the carbon atoms of the (OR) group. Thus, methyl methacrylate contains two carbon atoms in the ester group. A butyl ester contains five carbon atoms in the ester group.

Copolymer (B) comprises units derived from
(a) about 35 mole % to about 95 mole % of alkyl methacrylate ester monomers containing from about 9 to about 25 carbon atoms in the ester group and
(b) about 65 mole % to about 5 mole % of alkyl methacrylate ester monomers containing from about 7 to about 12 carbon atoms in the ester group, and wherein the alkyl moieties of the ester groups of alkyl methacrylate ester monomer (b) have 2-(C₁₋₄ alkyl) substituents,

In one embodiment, copolymer (B) may contain from about 0.1% to about 10% by weight of units derived at least one nitrogen containing vinyl monomer. In this case, copolymer (B) typically displays not only viscosity improving properties but also dispersant properties. Preferred nitrogen containing vinyl monomers are selected from the group consisting of vinyl substituted nitrogen heterocyclic monomers, dialkylaminoalkyl acrylate monomers, dialkylaminoalkyl acrylamide monomers, N-tertiary alkyl acrylamides, and vinyl substituted amines.

The alkyl moieties of the ester groups of alkyl methacrylate ester monomer (b) have 2-(C₁₋₄ alkyl) substituents. Particularly preferred is where monomer (b) comprises 2-ethylhexyl methacrylate.

Acrylate copolymers like these are known and are described in numerous U.S. Patents including Nos. 5,108,635; 5,534,175; 5,696,068; 5,821,313 and 6,124,249.

Acrylate copolymers useful in the present invention are prepared by methods known in the art, several of which are disclosed in the foregoing patents.

In one embodiment, copolymer (B) can be prepared by a process comprising reacting, in the presence of a free radical initiator, one or more alkyl acrylate ester monomers containing from 9 to about 25 carbon atoms in the ester group, and optionally, from about 0.1% to about 20% by weight of at least one member of the group consisting of vinyl aromatic monomers and nitrogen-containing vinyl monomers.

In another embodiment, copolymer (B) can be prepared by a process comprising reacting, in the presence of a free radical initiator, one or more alkyl acrylate ester monomers containing from 9 to about 25 carbon atoms in the ester group, and from about 0.1% to about 20% by weight of at least one member of the group consisting of vinyl aromatic monomers and nitrogen-containing vinyl monomers, optionally, in the presence of a chain transfer agent, wherein the acrylate monomers, the free radical initiator, and if used, the chain transfer agent, are first combined to form a mixture, whereupon from about 10% to about 80% of said mixture is mixed with the second monomer; then from about 20% to about 100% of the mixture of monomers is heated until an exotherm is noted, then while maintaining reaction temperature, first adding the balance, if any, of the mixture of monomers over about 0.25 hour to about 5 hours followed by addition over 0.25 to about 5 hours of the remaining mixture of acrylate ester monomers and initiator, optionally adding additional initiator, whereupon the reaction is continued to completion.

In one preferred embodiment, the alkyl acrylate monomers comprises at least about 50 mole % of the esters containing at least 6 carbon atoms in the ester group.

### Chain Transfer Agents

The process to prepare the acrylate copolymers may be conducted in the presence of a chain transfer agent. The use of chain transfer agents to regulate and limit molecular weight in polymer reactions is known, see for example "Concise Encyclopedia of Polymer Science and Engineering", J.I. Kroschwitz, Ed., Wiley-Interscience (New York, 1990), page 139. An extensive discussion of chain transfer, its effects, and chain-transfer agents together with an extensive bibliography, appears in the "Encyclopedia of Polymer Science and Technology", H.F. Mark, N.G. Gaylord, and N.M. Bikales. Eds., Interscience, (New York, 1965), pp. 575-610.

Sulfur compounds, especially mercaptans, particularly dodecyl mercaptans, for example, n- and tertiary dodecyl mercaptans, are preferred.

Polymerization can take place under a variety of conditions, among which are bulk polymerization, solution polymerization, emulsion polymerization, suspension polymerization and nonaqueous dispersion techniques.

Copolymer (B) is prepared employing conventional methods of radical polymerization.

Such methods are described in the work "Encyclopedia of Polymer Science and Engineering" (H.F. Mark, N.M. Bikales, C.G. Overberger and G. Menges), 2nd edition (1988), published by Wiley Interscience.

These methods include free-radical initiated polymerization employing azo compounds or peroxides. Also described therein are photochemical and radiation initiated methods.

### Initiators

Free radical generating reagents useful as polymerization initiators are well known to those skilled in the art. Numerous examples of free radical initiators are mentioned in texts by Flory and Bovey and Winslow mentioned hereinafter. An extensive listing of free radical initiators appears in J. Brandrup and E.H. Immergut. Editors, "Polymer Handbook", 2nd edition. John Wiley and Sons, New York (1975). pp. II-1 to II-40. Numerous free radical initiators are available and many are commercially available in large quantities. Useful initiators include organic peroxides, hydroperoxides and azo compounds. Redox initiators are also useful.

Examples of free radical initiators are t-butyl peroxide, t-butyl hydroperoxide, t-amyl peroxide, cumyl peroxide, dibenzoyl peroxide (Aldrich), t-butyl m-chloroperbenzoate, azobisvaleronitrile, t-butyl peroctoate and tertiary-butyl perbenzoate, (TRIGONOX^{®} 21 and TRIGONOX^{®} C. respectively, both from AKZO) and 2,2'-azobis(isobutyronitrile), VAZO^{®}-64, and, 2,2'-azobis(methylbutyronitrile). VAZO^{®}-67, both from DuPont.

Free radical initiators are usually used in amounts ranging from about 0.01% to about 10 percent by weight based on the total weight of reaction mixture. Generally, the initiators are used at about 0.05% to about 3% by weight, even more often from about 0.1 to about 2%, frequently from about 0.5% to about 1.5% or to about 1% by weight.

The choice of free radical initiator can be an important consideration. Considerations include the half-life of the initiator at a given temperature, nature of the reactants, reaction temperature, solvent or diluent, and the like.

Molecular weights of the polymer (B) can be controlled employing a number of techniques including choice of initiator, reaction temperature, concentration of monomers and solvent type. As noted previously, chain transfer agents can be used.

Copolymer (B) used in the present invention are generally prepared at reaction temperatures ranging from about 40°C to about 200°C, frequently, from about 60°C to about 160°C.

Because acrylic polymerizations may be accompanied by liberation of considerable heat, care must be taken to avoid uncontrolled reaction. Temperatures can be controlled by using reactors with cooling jackets, controlling rates of addition and use of reaction solvents.

The following examples are intended to illustrate several copolymers (B) of this invention as well as means for preparing same. Unless indicated otherwise all parts are parts by weight. It is to be understood that these examples are intended to illustrate several compositions and procedures and are not intended to limit the scope of the invention. Molecular weight values are determined employing gel permeation chromatography (GPC) employing well-characterized polymethacrylate (PMA) calibration standards. PDI is the polydispersity index, Mw/Mn. Filtrations are conducted using a diatomaceous earth filter aid.

### Example 1

A vessel is charged with 520 parts of a C₁₂₋₁₅ methacrylate (which contains less than 1% by weight of C₁₆ - C₁₈ methacrylate), 280 parts 2-ethylhexyl methacrylate, 94.5 parts mineral oil (Total 85N), 10.5 parts t-butylperoxy-2-ethylhexanoate (Trigonox T21S), 10.5 parts n-dodecanethiol, and 61.4 parts a hydrotreated naphthenic oil (Risella G07, Shell Germany) and stirred for 0.2 hour. One third of the mixture (326 parts) is charged to a reactor. An N₂ blanket is maintained throughout the reaction. The materials in the reactor are heated to 100°C over 0.2 hour whereupon an exotherm to 139.6 °C over 4 minutes is observed and heating is discontinued. After the peak exotherm is attained, the remaining 2/3 of the monomer/initiator/oil mixture is added over 1.5 hour. The temperature drops to 110°C during addition. The temperature is then maintained at 110 °C +/- 3°C for 2 hours. An additional 0.7 part Trigonox T21S in 6.3 parts 85N oil is added followed mixing for an additional 2.0 hours at 110°C +/- 3°C. The materials are mixed with an additional 39.45 parts Total 85N oil, stirred for 1 hour then heated to 120°C and filtered. Viscosity (ASTM D-445) @ 100°C = 356 centistokes.

### Example 2

A vessel is charged with 272.8 parts of a C₁₂₋₁₅ methacrylate (which contains less than 1% by weight of C₁₆ - C₁₈ methacrylate), 120 parts 2-ethylhexyl methacrylate, 73 parts 75N mineral oil (Pennzoil 75HC), 3 parts t-butylperoxy-2-ethylhexanoate (Trigonox T21) dissolved in 27 parts Pennzoil 75HC and 3 parts n-dodecanethiol and stirred for 0.2 hour. One third of the mixture (170 parts) is charged to a reactor followed by the addition of 7.2 parts N-(3-(dimethylamino)propyl methacrylamide and stirred under N₂ blanket for 0.1 hour. An N₂ blanket is maintained throughout the reaction. The materials in the reactor are heated to 110°C over 0.25 hour whereupon an exotherm is observed and heating is discontinued. The exotherm is to 138°C over 2 minutes. After the peak exotherm is attained, the temperature drops to 137°C whereupon the remaining 2/3 of the monomer/initiator/oil mixture is added over 1.5 hour. The temperature drops to 110°C about 0.2 hour after addition is started. The temperature is then maintained at 110 °C +/- 3°C for 1.5 hours. An additional 0.5 part Trigonox T21 in 4.5 parts Pennzoil 75HC oil is charged followed by heating at 110°C +/- 3°C for an additional 2.5 hours. The materials are vacuum stripped at 135°C at 50 mm Hg pressure for 0.5 hour. To the residue are added 33.1 parts Pennzoil 75HC followed mixing for an additional 0.5 hours and filtration The product contains 0.22% N and has viscosity (ASTM D-445) @ 100°C = 502.7 centistokes.

### Example 3

A container is charged with 33.9 parts methyl methacrylate, 7.5 parts butyl methacrylate, 133.6 parts C₉-C₁₁ methacrylate, 133.6 parts C₁₂-C₁₅ methacrylate, 67.7 parts C₁₆-C₁₈ methacrylate, 13.65 parts N-vinyl pyrrolidinone and 130 parts Risella G 07 oil. The materials are stirred for 0.25 hour, then a solution of 1.56 part VAZO-67 in 3.1 parts toluene is added followed by stirring for 0.1 hour. A reactor equipped as described in Example 1 is charged with about 1/3 of this solution; the remainder is placed in the addition funnel. With stirring and N₂ addition at 0.3 SCFH, the mixture is heated to 110°C over 0.3 hour, heating is stopped and the temperature rises exothermically to 138°C over 3 minutes. The temperature then begins to drop and after 2 minutes is at 136°C. Dropwise addition of the remaining monomer-initiator mixture is begun and is continued for 2 hours. Temperature decreases to 110°C after 0.3 hours and is held at 110°C during addition. After addition is completed, the mixture is cooled to 90°C over 0.3 hour followed by charging 0.25 part Trigonox 21. The materials are stirred at 90°C for 2 hours, 0.26 part Trigonox 21 is charged and the materials are heated for an additional 2 hours. The materials are diluted with 80 parts additional Risella G 07 oil, heated with stirring to 150°C, and stripped at 150°C, 40-50 mm Hg pressure for 1 hour, collecting 1 part distillate. The residue is filtered at 110°C with a diatomaceous earth filter aid. The filtrate contains a polymer having Mₙ = 68,000 and M_{w}/Mₙ = 2.91.

While the processes to prepare the copolymers used in the compositions of the instant invention are often conducted in conventional reactors employing agitation means including mechanical stirrers and/or circulating pumps, another useful means for preparing copolymers is to employ a high energy mechanical mixing device. These include roll mills, ball mills or extruders. Of these, extruders arc preferred since the comonomers can be fed to the feed hopper in any desired fashion. Methods of employing such devices, and especially extruders, are described in a number of patents including Hayashi et al, U.S. 4,670,173 and Sopko et al, U.S. 5,039,433.

The copolymers used in the compositions of this invention may be prepared in the presence of a diluent. A diluent may also be added to a substantially diluent-free copolymer, usually by dissolving or dispersing the substantially diluent-free polymer in an appropriate diluent. In another embodiment, an additional diluent, often a higher boiling diluent such as an oil, may be added to a copolymer which was prepared in, and still contains, a lower boiling diluent which is then removed by common methods such as distillation. Preferably, when the polymer is prepared in the presence of a diluent, the diluent is an oil.

In one embodiment, the diluent is a mineral oil. In a particular embodiment the mineral oil consists essentially of hydrotreated naphthenic oil. Also contemplated are hydrodewaxed mineral oils. The diluent may also be a synthetic oil. Common synthetic oils are ester type oils, polyolefin oligomers or alkylated benzenes.

The expression "substantially inert" is often used in reference to diluents. When used in this context, "substantially inert" means the diluent is essentially inert with respect to any reactants or compositions of this invention, that is, it will not, under ordinary circumstances, undergo any significant reaction with any reactant or composition, nor will it interfere with any reaction or composition of this invention.

Molecular weights of polymers are determined using well-known methods described in the literature. Examples of procedures for determining molecular weights are gel permeation chromatography (also known as size-exclusion chromatography) and vapor phase osmometry (VPO). These and other procedures are described in numerous publication including:
P.J. Flory, "Principles of Polymer Chemistry" Cornell University Press (1953), Chapter VII, pp 266-316, and
"Macromolecules, an Introduction to Polymer Science", F. A. Bovey and F.H. Winslow, Editors, Academic Press (1979), pp 296-312.
W.W. Yau, J.J. Kirkland and D.D. Bly, "Modern Size Exclusion Liquid Chromatography", John Wiley and Sons, New York, 1979.

A measurement which is complementary to a polymer's molecular weight is the melt index (ASTM D-1238). Polymers of high melt index generally have low molecular weight, and vice versa. Mooney Viscosity (ASTM Procedure D-1646-87) relates indirectly to polymer molecular weight. All other factors being equal, as molecular weight of the polymer increases, so too does the Mooney viscosity.

ASTM Procedures D-1238 and D-1646-87 appear in Volumes 8 and 9, respectively, of the aforementioned Annual Book of ASTM Standards.

A preferred method, and the method employed to determine the molecular weights of polymers as set forth herein, is gel permeation chromatography (GPC). For polyolefins, polyolefinic standards are usually employed. Molecular weights of acrylate polymers are preferably determined employing polyacrylate standards.

Disclosed herein are polymeric compositions. In a preferred embodiment, the polymeric composition comprises from about 25% to about 75% by weight of (A) an ethylene-alpha olefin copolymer wherein the ethylene content ranges from about 30 mole % to about 85 mole %; and from about 75% to about 25% by weight of (B) a polymethacrylate copolymer comprising units derived from
(a) 35 mole % to 95 mole % of alkyl methacrylate ester monomers containing from 9 to 25 carbon atoms in the ester group and
(b) 65 mole % to 5 mote % of alkyl methacrylate ester monomers containing from 7 to 12 carbon aroma in die ester group, and wherein the alkyl moieties of the ester groups of alkyl methacrylate ester monomer (b) have 2-(C₁₋₄ alkyl) substituents
said copolymer (B) having Mn ranging from 10,000 to 350,000 and wherein the weight ratio of (A) : (B) ranges from about 25:75 to about 75:25.

Polymeric compositions of this invention can be prepared by mixing together the ethylene aliphatic olefin (A) and the alkyl acrylate copolymer (B).

### Other Additives

As mentioned, lubricating oil compositions of this invention may contain other components. The use of such additives is optional and the presence thereof in the compositions of this invention will depend on the particular use and level of performance requited. Thus the other additive may be included or excluded.

The compositions may comprise a metal salt, frequently a zinc salt of a dithiophosphoric acid. One or more metal salts of dithiophosphoric acids may be present in a minor amount to provide additional extreme pressure, anti-wear and anti-oxidancy performance.

Other additives that may optionally be used in the lubricating oils of this invention include, for example, detergents, dispersants, viscosity improvers, oxidation inhibiting agents, pour point deposing agents, extreme pressure agents, anti-wear agents, color stabilizers, seal swell agents, odor masking agents and anti-foam agents.

These include, but are not limited to, auxiliary extreme pressure agents and corrosion and oxidation inhibiting agents exemplified by chlorinated aliphatic hydrocarbons, organic sulfides and polysulfides, phosphorus esters including dihydrocarbon hydrogen phosphites and trihydrocarbon phosphites, molybdenum compounds, and the like.

Auxiliary viscosity improvers (also sometimes referred to as viscosity index improvers or viscosity modifiers) may be included. These arc exemplified by polymers, including polyisobutenes, polymethacrylic acid esters, diene polymers, polyalkyl styrenes, esterified styrene-maleie anhydride copolymers, alkenylarene-conjugated diene copolymers and polyolefins. Multifunctional viscosity improvers, other than those of the present invention, which also have dispersant and/or antioxidancy properties are known and may optionally be used in addition to the products of this invention. Such products are described in numerous publications including those mentioned in the Background of the Invention.

Pour point depressants are a particularly useful type of additive often included in the lubricating oils described herein. See for example, page 8 of 'Lubricant Additives" by C.V, Smalheer and R. Kennedy Smith (Lezius-Hiles Company Publisher, Cleveland, Ohio, 1967). Pour point depressants useful for the purpose of this invention, techniques for their preparation and their use are described in U. S. Patent numbers 2,387,501; 2,015,748; 2,655,479; 1,815,022; 2,191,498; 2,666,748; 2,721,877; 2,721,878; and 3,250,715.

Anti-foam agents used to reduce or prevent the formation of stable foam include silicones or organic polymers. Examples of these and additional anti-foam compositions are described in "Foam Control Agents", by Henry T. Kerner (Noyes Data Corporation, 1976), pages 125-162.

Detergents and dispersants may be of the ash-producing or ashless type. The ash-producing detergents are exemplified by oil soluble neutral and basic salts of alkali or alkaline earth metals with sulfonic acids, carboxylic acids, phenols or organic phosphorus acids characterized by a least one direct carbon-to-phosphorus linkage.

The term "basic salt" is used to designate metal salts wherein the metal is present in stoichiometrically larger amounts than the organic acid radical. Basic salts and techniques for preparing and using them are well known to those skilled in the art and need not be discussed in detail here.

Ashless detergents and dispersants are so-called despite the fact that, depending on its constitution, the detergent or dispersant may upon combustion yield a nonvolatile residue such as boric oxide or phosphorus pentoxide; however, it does not ordinarily contain metal and therefore does not yield a metal-containing ash on combustion. Many types are known in the art, and any of them are suitable for use in the lubricants of this invention. The following are illustrative:
(1) Reaction products of carboxylic acids (or functional derivatives thereof) containing at least about 34 and preferably at least about 54 carbon atoms with nitrogen containing compounds such as amine, organic hydroxy compounds such as phenols and alcohols, and/or basic inorganic materials.
(2) Reaction products of relatively high molecular weight aliphatic or alicyclic halides with amines, preferably polyalkylene polyamines. These may be characterized as "amine dispersants".
(3) Reaction products of alkyl phenols in which the alkyl groups contains at least about 30 carbon atoms with aldehydes (especially formaldehyde) and amines (especially polyalkylene polyamines), which may be characterized as "Mannich dispersants".
(4) Products obtained by post-treating the carboxylic amine or Mannich dispersants with such reagents as urea, thiourea, carbon disulfide, aldehydes, ketones, carboxylic acids, hydrocarbon-substituted succinic anhydrides, nitriles, epoxides, boron compounds, phosphorus compounds or the like.
(5) Polymers and copolymers of oil-solubilizing monomers such as decyl methacrylate, vinyl decyl ether and high molecular weight olefins with monomers containing polar substituents, e.g., aminoalkyl acrylates or methacrylates, acrylamides and poly-(oxyethylene)-substituted acrylates. These may be characterized as "polymeric dispersants".

The above-mentioned dispersants and viscosity improvers may be used in addition to the additives of this invention.

These compositions are well known to those skilled in the art and the relevant additives used in lubricating oils compositions are described in numerous U.S. patents including U.S. 4,234,435, U.S. 4,904,401, U.S. 4,938,881, U.S. 4,952,328, U.S. 4,957,649, U.S. 4,981,602, U.S. 5,696,060 and 5,696,067.

The above-illustrated additives may each be present in lubricating compositions at a concentration of as little as 0.001% by weight, usually ranging from about 0.01% to about 20% by weight. In most instances, they each contribute from about 0.1% to about 10% by weight, more often up to about 5% by weight.

### The Oil of Lubricating Viscosity.

The lubricating compositions and methods of this invention employ an oil of lubricating viscosity, including natural or synthetic lubricating oils and mixtures thereof. Useful oils of lubricating viscosity include those having kinematic viscosities ranging from about 1 to about 80 centistokes or even higher (cSt) at 100°C. In one embodiment, the oil of lubricating viscosity is selected to provide lubricating compositions with a kinematic viscosity of at least about 3.5 cSt, or at least about 4.0 cSt at 100°C.

Natural oils include animal oils and vegetable oils (e.g. castor oil, lard oil) as well as mineral lubricating oils such as liquid petroleum derived oils and solvent-treated or acid treated mineral lubricating oils of the paraffinic, naphthenic or mixed paraffinic-naphthenic types. Oils of lubricating viscosity derived from coal or shale are also useful. Synthetic lubricating oils include hydrocarbon oils and halosubstituted hydrocarbon oils such as polymerized and interpolymerized olefins, etc. and mixtures thereof, alkylated aromatics, for example, alkylbenzenes, polyphenyl, (e.g., biphenyls, terphenyls, alkylated polyphenyls, etc.), alkylated diphenyl ethers and alkylated diphenyl sulfides and the derivatives, analogs and homologues thereof and the like.

Alkylene oxide polymers and interpolymers and derivatives thereof where their terminal hydroxyl groups have been modified by esterification, etherification, etc., constitute another useful class of known synthetic lubricating oils.

Another suitable class of synthetic lubricating oils that can be used comprises the esters of di- and polycarboxylic acids and those made from C₅ to C₂₀ monocarboxylic acids and polyols and polyolethers.

Other synthetic lubricating oils include liquid ester of phosphorus-containing acids, for example, phosphate esters, polymeric tetrahydrofurans and the like, silicon-based oils such as the polyalkyl-, polyaryl-, polyalkoxy-, or polyaryloxy-siloxane oils and silicate oils.

Unrefined, refined and rerefined oils, either natural or synthetic (as well as mixtures of two or more of any of these) of the type disclosed hereinabove can be used in the compositions of the present invention. Unrefined oils are those obtained directly from natural or synthetic sources without further purification treatment. Refined oils are similar to the unrefined oils except they have been further treated in one or more purification steps to improve one or more properties. Refined oils include solvent refined oils, hydrorefined oils, hydrofinished oils, hydrotreated oils, and oils obtained by hydrocracking and hydroisomerization techniques.

Rerefined oils are obtained by processes similar to those used to obtain refined oils applied to refined oils which have been already used in service. Such rerefined oils often are additionally processed by techniques directed to removal of spent additives and oil breakdown products.

Specific examples of the above-described oils of lubricating viscosity are given in Chamberlin, III, U.S. 4,326,972, European Patent Publication 107,282, and A. Sequeria, Jr., Lubricant Base Oil and Wax Processing, Chapter 6, Marcel Decker, Inc., New York (1994).

Preferred oils of lubricating viscosity are mineral oils containing at least about 55% aliphatic saturates, less than 0.5% sulfur, preferably less than 0.1% sulfur and more often less than 0.1% sulfur and viscosity index greater than 100.

API Group III oils containing at least 90% saturates, no more than 0.03% sulfur, often less than 0.01% sulfur and viscosity index at least 120 are especially preferred for gear oils of this invention. These are described in American Petroleum Institute (API) publication 1509, "Engine Oil Licensing and Certification System", Appendix E-API Base Oil Interchangeability Guidelines for Passenger Car Motor Oil and Diesel Engine Oils".

The level of unsaturation can be determined by iodine number determinations using the procedure set out in ASTM Procedure D-460.

A basic, brief description of lubricant base oils appears in an article by D.V. Brock, "Lubrication Engineering", Volume 43, pages 184-5, March, 1987.

The various additives described herein can be added directly to the lubricant. Preferably, however, they are diluted with a substantially inert, normally liquid organic diluent such as mineral oil, naphtha, benzene, toluene or xylene, to form an additive concentrate. Preferred additive concentrates contain the diluents referred to hereinabove. These concentrates usually comprise about 0.1 to about 80% by weight of the compositions of this invention and may contain, in addition, one or more other additives known in the art or described hereinabove. Concentrations such as 15%, 20%, 30% or 50% or higher may be employed.

### LUBRICATING OIL COMPOSITIONS

Disclosed herein are lubricating oil compositions comprising an oil of lubricating viscosity and a total of from about 1% to about 50% by weight of copolymers (A) and (B) as described hereinabove.

In one particular embodiment, the lubricating oil composition is an automatic transmission fluid. Automatic transmission fluids of this invention typically comprise a major amount of an oil of lubricating viscosity, a total of from about 3% to about 12%, often to about 10% by weight of a polymeric composition comprising copolymers (A) and (B) as described above and minor amounts of at least one metal dithiophosphate, seal swell agent, pour point depressant, ashless dispersant and corrosion inhibitor.

In another embodiment, the lubricating oil composition is a gear oil composition comprising a major amount of an oil of lubricating viscosity, preferably a Group III oil, a total of from about 3% to about 30% by weight of a polymeric composition comprising copolymers (A) and (B) as described above and minor amounts of extreme pressure additives, antiwear agents and corrosion inhibitors.

The lubricating compositions of this invention are illustrated by the examples in the following Tables. The lubricating compositions are prepared by combining the specified ingredients, individually or from concentrates, in the indicated amounts and oil of lubricating viscosity to make the total 100 parts by weight. The amounts shown are parts by weight and, unless indicated otherwise, are amounts of chemical present on an oil-free basis. Thus, for example, an additive comprising 50% oil used at 10% by weight in a blend, provides 5% by weight of chemical. These examples are presented for illustrative purposes only, and are not intended to limit the scope of this invention.

### Example A

An ATF is prepared by mixing together 3 parts of the product of Example 2, 0.2 parts of a 65% in mineral oil solution of a polymethacrylate pour point depressant, 250 parts per million parts of lubricating oil composition (ppm) of red dye, 4.5 parts of an ethylene-propylene copolymer having M̅ₙ ~ 3300 and M̅_{w}/M̅ₙ = 2.3 (LUCANT HC-2000), 250 ppm silicone antifoam agent, 7.35 parts of an additive concentrate containing 40.8 parts of a mixture of dispersants consisting of polyisobutylene (M̅ₙ ~ 950) substituted succinic anhydride-polyethylene polyamine reaction product, borated polyisobutylene (M̅ₙ ~ 950) substituted succinic anhydride-polyethylene polyamine reaction product, and polyisobutylene (M̅ₙ ~ 950) substituted succinic anhydride-pentaerythritol ester-polyethylene polyamine reaction product further reacted with 2,5-dimercapto-1,3,4-thiadiazole (DMTD), 1.4 parts 85% aqueous phosphoric acid, 2.7 parts dibutyl hydrogen phosphite, 8.2 parts dialkyl diphenylamine, 6.8 parts dodecyl mercaptan-propylene oxide reaction product, 0.4 parts 2,5-di(t-nonyldithio)-1,3,4-thiadiazole, 1.4 parts fatty imidazoline, 2.7 parts di-fatty hydrocarbon hydrogen phosphite, 1.4 parts borated C₁₆ epoxide, 3% borated magnesium sulfonate, and sufficient mineral oil to make 100 parts concentrate, and sufficient Texaco ATF basestock to prepare 100 parts of ATF.

### Example B

An ATF is prepared as in Example A except 4.23 parts LUCANT HC-2000 and 2.82 parts of the product of Example 2.

### Comparative Example A

An ATF is prepared as in Example A except 12.6 parts of the product of Example 2 and 0 parts of LUCANT HC-2000.

### Comparative Example B

An ATF is prepared as in Example A except 0 parts of the product of Example 2 and 6 parts of LUCANT HC-2000.

Viscosity characteristics and shear stability of the ATF are illustrated in the following Table. Viscosity determinations are made employing the test procedures indicated.

Several tests are available to measure a compositions resistance to shear under conditions of high shear stress. One useful test is the KRL Tapered Bearing Shear Test. This is a published standard test entitled "Viscosity Shear Stability of Transmission Lubricants" and is described in CEC L-45-T93, available from CEC, 61 New Cavendish Street, London WIM 8AR, England. The same test is also published as DIN 51 350, part 6, and is available from Deutsches Institut für Normung, Burgerfenshase 6, 1000 Berlin 30, Germany. Both of these references are incorporated herein by reference. Employing this procedure for 20 hours, the shear loss of several of the foregoing examples is determined.

| Example: | Comp B | Comp A | A | B |
|---|---|---|---|---|
| Tests: | | | | |
| -40°C Brookfield Viscosity | | | | |
| (ASTM D2983) (centipoise) | 16,000 | 7,690 | 10,400 | 9,230 |
| KRL Shear | | | | |
| 100°C vis (initial) (centistokes) | 6.947 | 7.288 | 6.922 | 6.737 |
| 100°C vis (final) (centistokes) | 6.681 | 6.35 | 6.467 | 6.348 |
| Δ viscosity (%) | -3.8 | -12.9 | -6.6 | -5.8 |

As be seen from the foregoing data, the combination of copolymers provides shear stability and good viscosity improving characteristics without adversely affecting low temperature performance. Moreover, this is accomplished with reduced total levels of copolymer.

### Examples C-G

API 75W-90 gear lubricants contain 4.8 parts sulfurized isobutylene, 1.65 parts of a the product obtained by reacting the hydroxypropyl ester of di-(methylamyl) dithiophosphate with P₂O₅ and neutralizing with a branched primary amine, 1.24 parts of borated polyisobutylene (M̅ₙ ~ 950) substituted succinic anhydride-polyethylene polyamine reaction product, 0.25 part alkylated naphthalene, 5 parts C₁₆₋₁₈ alkylated benzene, 0.35 parts oleyl amine, 20 ppm siloxane based antifoam agent, 0.1 part carboxylic polymer antifoam agent, 0.18 part of 2,5-di(t-nonyldithio)-1,3,4-thiadiazole the indicated amounts of LUCANT HC-2000 and product of Example 1 in a sufficient amount of the indicated base oil to prepare 100 parts of lubricant.

| Example | C | D | E | F | G |
|---|---|---|---|---|---|
| Base Oil | 4 cSt HVI | 4 cSt PAO | 4 cSt HVI | 4 cSt PAO | 4 cSt PAO |
| | Mineral Oil | | Mineral Oil | | |
| | (API Gp. III) | | (API Gp. III) | | |
| LUCANT HC2000 | 12 | 12 | 15 | 15 | 18 |
| Prod Ex. 1 | 12 | 12 | 15 | 15 | 18 |
| Kinetic viscosity | 16.53 | 14.73 | 21.42 | 19.86 | 26.39 |
| (100°C) cSt. | | | | | |
| Kinetic Viscosity | 101.61 | 84.14 | 136.18 | 120.97 | 171.50 |
| (40° C) cSt. | | | | | |

### Examples H-K

API 75W-90 gear lubricants contain 4.8 parts sulfurized isobutylene, 1.65 parts of a the product obtained by reacting the hydroxypropyl ester of di-(methylamyl) dithiophosphate with P₂O₅ and neutralizing with a branched alkyl primary amine, 0.15 part oleyl imidazoline, 1.5 parts of branched alkyl amine salt of C₁₄₋₁₈ alkyl phosphoric acid, 1.74 parts of borated polyisobutylene (M̅ₙ ~ 950) substituted succinic anhydride-polyethylene polyamine reaction product, 0.25 part alkylated naphthalene, 5 parts C₁₆₋₁₈ alkylated benzene, 0.35 parts oleyl amine, 0.035 parts monoisopropanolamine, 0.13 parts oleylamide, 20 ppm siloxane based antifoam agent, 0.1 part carboxylic polymer antifoam agent, 0.18 part of 2,5-di(t-nonyldithio)- 1,3,4-thiadiazole, the indicated amounts of LUCANT HC-2000 and product of Example 1 in a sufficient amount of the indicated base oil to prepare 100 parts of lubricant.

| Example | H | I | J | K |
|---|---|---|---|---|
| Base Oil | 4 cSt HVI | 4 cSt PAO | 4 cSt HVI | 4 cSt PAO |
| | Mineral Oil | | Mineral Oil | |
| | (API Gp. III) | | (API Gp. III) | |
| LUCANT HC2000 | 12 | 12 | 15 | 15 |
| Prod Ex. 1 | 12 | 12 | 15 | 15 |
| Kinetic viscosity | 15.96 | 14.63 | 21.21 | 19.51 |
| (100°C) cSt. | | | | |
| Kinetic Viscosity | 96.39 | 84.18 | 136.89 | 120.19 |
| (40° C) cSt. | | | | |

### Examples L-O

API 75W-90 gear lubricants contain 4.8 parts sulfurized isobutylene, 1.9 parts of C₁₄₋₁₆ phosphite, 0.59 parts of a the product obtained by reacting the hydroxypropyl ester of di-(methylamyl) dithiophosphate with P₂O₅ and neutralizing with a branched alkyl primary amine, 0.15 part oleyl imidazoline, 1.5 parts of branched alkyl amine salt of C₁₄₋₁₈ alkyl phosphoric acid, 1.74 parts of borated polyisobutylene (M̅ₙ ~ 950) substituted succinic anhydride-polyethylene polyamine reaction product, 0.25 part alkylated naphthalene, 5 parts C₁₆₋₁₈ alkylated benzene, 0.4 parts oleyl amine, 20 ppm siloxane based antifoam agent, 0.1 part carboxylic polymer antifoam agent, 0.18 part of 2,5-di(t-nonyldithio)-1,3,4-thiadiazole, the indicated amounts of LUCANT HC-2000 and product of Example 1 in a sufficient amount of the indicated base oil to prepare 100 parts of lubricant.

| Example | L | M | N | O |
|---|---|---|---|---|
| Base Oil | 4 cSt HVI | 4 cSt PAO | 4 cSt HVI | 4 cSt PAO |
| | Mineral Oil | | Mineral Oil | |
| | (API Gp. III) | | (API Gp. III) | |
| LUCANT HC2000 | 12 | 12 | 15 | 15 |
| Prod Ex. 1 | 12 | 12 | 15 | 15 |
| Kinetic viscosity | 15.86 | 14.48 | 20.84 | 19.23 |
| (100°C) cSt. | | | | |
| Kinetic Viscosity | 94.70 | 82.12 | 132.12 | 115.61 |
| (40° C) cSt. | | | | |

### Example P

A partial synthetic gear oil composition (75W-90) contains 30 parts API Group III basestock (Chevron UCBO, 4 cSt (100N)), 29 parts Petro-Canada VHVI 8 cSt (250) basestock, 10 parts isooctyl adipate (Mobil VSA Ester DB-32) 15.5 parts LUCANT HC-2000, 15.5 parts of the product of Example 1, 4.8 parts sulfurized isobutylene, 1.76 parts of a the product obtained by reacting the hydroxypropyl ester of di-(methylamyl) dithiophosphate with P₂O₅ and neutralizing with a branched alkyl primary amine, 1.51 parts of borated polyisobutylene (M̅ₙ ~ 950) substituted succinic anhydride-polyethylene polyamine reaction product, 1 part oleyl imidazoline, 50 ppm siloxane based antifoam agent, 0.08 part carboxylic polymer antifoam agent, 0.18 part of 2,5-di(t-nonyldithio)-1,3,4-thiadiazole, 0.995 parts 4 cSt polyalphaolefin and sufficient mineral oil to bring the total to 100 parts by weight. Kinematic viscosity @ 100°C = 27.90.

### Example Q

A synthetic gear oil composition (75W-90) contains 70 parts 4 cSt polyalphaolefin basestock, 15 parts LUCANT HC-2000, 15 parts of the product of Example 1, 5 parts C₁₆₋₁₈ alkylated benzene, 0.25 part alkylated naphthalene, and 10 parts of an additive concentrate containing 1.54 parts of an 80% by weight in mineral oil spirits solution of heptyl-hydroxyphenylthio-substituted 1,3,4-thiadiazole, 16.62 parts of a the product obtained by reacting the hydroxypropyl ester of di-(methylamyl) dithiophosphate with P₂O₅ and neutralizing with a branched alkyl primary amine, 12.5 parts of a 67% in mineral oil solution of borated polyisobutylene (M̅ₙ ~ 950) substituted succinic anhydride-polyethylene polyamine reaction product, 50 parts sulfurized isobutylene, 0.5 part carboxylic polymer antifoam agent, 1.25 part oleylamide, 17.21 parts mineral oil and 0.38 part monoisopropanolamine.

### Reference Oil 1

A mineral oil based 80W-90 gear lubricant contains 3.2 parts sulfurized isobutylene, 1.16 parts of the product obtained by reacting the hydroxypropyl ester of di-(methylamyl) dithiophosphate with P₂O₅ and neutralizing with a branched alkyl primary amine, 0.4 part of branched alkyl amine salt of C₁₄₋₁₈ alkyl phosphoric acid, 0.88 parts of borated polyisobutylene (M̅ₙ ~ 950) substituted succinic anhydride-polyethylene polyamine reaction product, 0.6 part sulfurized fatty olefin/ester/acid mixture, 0.027 parts monoisopropanolamine, 0.1 part oleylamide, 0.053 part carboxylic polymer antifoam agent, 0.016 part of 2,5-di(t-nonyldithio)-1,3,4-thiadiazole and 0.092 part of alkyl hydroxyphenylthio DMTD in a sufficient amount of base oil to prepare 100 parts of lubricant. Kinematic viscosity (cSt) @ 40°C =138.35, @ 100° = 14.66.

### Reference Oil 2

A synthetic based 75W-90 gear oil composition contains 1.57 parts mixed di-C₁₆ alkyl/C₁₈ alkenyl hydrogen phosphonate, 25 parts polyisobutylene (M̅ₙ ~ 1000), 0.2 part of aminopropyl amine neutralized styrene-C₁₃₋₁₆ maleate copolymer, 0.15 part of 2,5-di(t-nonyldithio-1,3,4-thiadiazole), 4.57 parts sulfurized isobutylene, 1.66 parts of the product obtained by reacting the hydroxypropyl ester of di-(methylamyl) dithiophosphate with P₂O₅ and neutralizing with a branched alkyl primary amine, 0.84 part of the product obtained by reacting the hydroxypropyl ester of di-(methylamyl) dithiophosphate with P₂O₅ and neutralizing with a branched alkyl primary amine, 0.13 part oleylamide, 0.04 part monoisopropanol amine and 0.1 part carboxylic polymer antifoam agent, in a 4 cSt. polyolefin oligomer base oil. Kinematic viscosity (cSt) @ 40°C = 97.40, @ 100° = 14.42.

### Reference Oil 3

A synthetic gear oil composition (75W-90) contains 55.5 parts 4 cSt polyalphaolefin basestock, 30.7 parts polyisobutylene having number average molecular weight of about 1500, 5 parts C₁₆₋₁₈ alkylated benzene, 0.25 part alkylated naphthalene and 10 parts of the additive concentrate used in Example Q.

Traction is a property used to predict the operating temperature properties of fluids. Using the Mini-Traction Machine (MTM) test rig described hereinabove, the traction profiles of lubricant Example Q and Reference Oils 1-3 were compared at 75°F over a range of sliding to rolling contacts. Lubricant example Q is identical to Reference oil 3 except lubricant Example Q employs the mixture of polymers of the instant invention while Reference Oil 3 employs a polyisobutylene. It was determined that lubricant Example Q runs with the lowest traction coefficients throughout the entire slide-roll range, suggesting lower operating temperatures under various modes of contact. Reference Oil 1 had the greatest traction coefficient over the entire range while Reference Oil 2 had somewhat lower traction coefficients compared to Oil 3 but substantially greater than the traction coefficients of lubricant Example Q.

Using the axle durability test rig discussed hereinabove, the test that compares operating temperatures under five different operating conditions, the operating temperatures of several lubricating oil compositions are compared. Specifically, the performance of lubricant example D and that of lubricant Reference 2 are compared to a baseline 80W-90 lubricant, Reference lubricant 1. The test results are presented as differences in operating temperature of the test oils compared to the baseline.

**Table I: Staged Durability: Operating Temperature Comparison (ΔT(°F))**

| Lubricant | Stage I | Stage II | Stage III | Stage IV | Stage 5 |
|---|---|---|---|---|---|
| Example D | -20.8 | -30.2 | -26 | -28.2 | -24.8 |
| Reference 2 | 7.4 | -12 | 4.9 | -1.3 | -15.3 |

From these data, it is apparent that durability of lubricant D is consistently superior to both the baseline lubricant and the comparative lubricant.

It is known that some of the materials described above may interact in the final formulation, so that the components of the final formulation may be different from those that are initially added. For instance, metal ions (of, e.g., a detergent) can migrate to other acidic sites of other molecules. The products formed thereby, including the products formed upon employing the composition of the present invention in its intended use, may not susceptible of easy description. Nevertheless, all such modifications and reaction products are included within the scope of the present invention; the present invention encompasses the composition prepared by admixing the components described above.

Each of the documents referred to above is incorporated herein by reference. Except in the examples, or where otherwise explicitly indicated, all numerical quantities in this description specifying amounts of materials, reaction conditions, molecular weights, number of carbon atoms, and the like, are to be understood as modified by the word "about". Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil which may be customarily present in the commercial material, unless otherwise indicated. It is to be understood that the upper and lower amount, range, and ratio limits set forth herein may be independently combined. As used herein, the expression "consisting essentially of permits the inclusion of substances which do not materially affect the basic and novel characteristics of the composition under consideration.

## Claims

1. A method of lubricating a driveline using a lubricating oil composition comprising an oil of lubricating viscosity and a total of from 1 to 50% by weight of copolymers comprising
(A) at least one ethylene-aliphatic olefin copolymer wherein the aliphatic olefins contain from 3 to 24 carbon atoms, said copolymer (A) having Mₙ ranging from 600 to 5000; and
(B) at least one copolymer comprising units derived from
(a) 35 mole % to 95 mole % of alkyl methacrylate ester monomers containing from 9 to 25 carbon atoms in the ester group and
(b) 65 mole % to 5 mole % of alkyl methacrylate ester monomers containing from 7 to 12 carbon atoms in the ester group and wherein the alkyl moieties of the ester groups of alkyl methacrylate ester monomer (b) have 2-(C₁₋₄ alkyl) substituents,
said copolymer (B) having Mₙ ranging from 10,000 to 350,000; and wherein the weight ratio of (A):(B) ranges from 99:1 to 1:99.

2. The method of claim 1 wherein monomer (b) comprises 2-ethylhexyl methacrylate.

3. The method of claim 1 wherein the ethylene content of the ethylene-aliphatic olefin copolymer (A) ranges from 30 mole % to 85 mole % and wherein the weight ratio (A):(B) ranges from 25:75 to 75:25.

4. The method of claim 3 wherein (B) further comprises units derived from 0.1 % to 10 % by weight of at least one nitrogen-containing vinyl monomer.

5. The method of claim 1 wherein the lubricating oil composition further comprises at least one member of the group consisting of pour point depressants, corrosion inhibitors, extreme pressure additives, antiwear additives, antioxidants, detergents, ashless dispersants, friction modifiers, and antifoam agents and wherein the oil of lubricating viscosity comprises at least one member selected from the group consisting of mineral oil, synthetic oil or mixtures thereof having kinematic viscosity of 100°C ranging from 4 to 10 centistokes.

6. The method of claim 1 wherein the driveline is an automatic transmission and wherein the method comprises using a lubricating oil composition which comprises a major amount of an oil of lubricating viscosity, a total of from 3% to 10% by weight of a polymeric composition comprising
(A) at least one ethylene-aliphatic olefin copolymer wherein the aliphatic olefins contain from 3 to 24 carbon atoms, said copolymer (A) having Mₙ ranging from 600 to 5000; and
(B) at least one copolymer comprising units derived from
(a) 35 mole % to 95 mole % of alkyl methacrylate ester monomers containing from 9 to 25 carbon atoms in the ester group and
(b) 65 mole % to 5 mole % of alkyl methacrylate ester monomers containing from 7 to 12 carbon atoms in the ester group and wherein the alkyl moieties of the ester groups of alkyl methacrylate ester monomer (b) have 2-(C₁₋₄ alkyl) substituents,
said copolymer (B) having Mₙ ranging from 10,000 to 350,000; and wherein the weight ratio of (A):(B) ranges from 99:1 to 1:99,
and minor amounts of at least one metal dithiophosphate, seal swell agent, pour point depressant, ashless dispersant and corrosion inhibitor.

7. The method of claim 1 wherein the driveline is a gear and wherein the method comprises using a lubricating oil composition which comprises a major amount of a Group III oil, a total of from 3% to 30% by weight of a polymeric composition comprising
(A) at least one ethylene-aliphatic olefin copolymer wherein the aliphatic olefins contain from 3 to 24 carbon atoms, said copolymer (A) having Mₙ ranging from 600 to 5000; and
(B) at least one copolymer comprising units derived from
(a) 35 mole % to 95 mole % of alkyl methacrylate ester monomers containing from 9 to 25 carbon atoms in the ester group and
(b) 65 mole % to 5 mole % of alkyl methacrylate ester monomers containing from 7 to 12 carbon atoms in the ester group and wherein the alkyl moieties of the ester groups of alkyl methacrylate ester monomer (b) have 2-(C₁₋₄ alkyl) substituents,
said copolymer (B) having Mₙ ranging from 10,000 to 350,000; and wherein the weight ratio of (A):(B) ranges from 99:1 to 1:99,
and minor amounts of extreme pressure additives, antiwear agents and corrosion inhibitors.

## Patentansprüche

1. Verfahren zum Schmieren eines Antriebs unter Verwendung einer Schmierölzusammensetzung, umfassend ein Öl mit schmierender Viskosität und eine Gesamtmenge von 1 bis 50 Gew.-% an Copolymeren, welche folgendes umfassen
(A) wenigstens ein Copolymer von Ethylen und aliphatischem Olefin, wobei die aliphatischen Olefine 3 bis 24 Kohlenstoffatome enthalten und das Copolymer (A) Mₙ im Bereich von 600 bis 5000 hat und
(B) wenigstens ein Copolymer, umfassend Einheiten, die abgeleitet sind von
(a) 35 Mol-% bis 95 Mol-% Alkylmethacrylatestermonomeren mit 9 bis 25 Kohlenstoffatomen in der Estergruppe und
(b) 65 Mol-% bis 5 Mol-% Alkylmethacrylatestermonomeren mit 7 bis 12 Kohlenstoffatomen in der Estergruppe und wobei die Alkylreste der Estergruppen des Alkylmethacrylatestermonomers (b) 2-(C₁₋₄-Alkyl)-Substituenten haben,
wobei das Copolymer (B) Mₙ im Bereich von 10.000 bis 350.000 hat und wobei das Gewichtsverhältnis von (A):(B) im Bereich von 99:1 bis 1:99 liegt.

2. Verfahren nach Anspruch 1, wobei Monomer (b) 2-Ethylhexylmethacrylat umfaßt.

3. Verfahren nach Anspruch 1, wobei der Ethylengehalt des Copolymers von Ethylen und aliphatischem Olefin (A) im Bereich von 30 Mol-% bis 85 Mol-% liegt und wobei das Gewichtsverhältnis (A):(B) im Bereich von 25:75 bis 75:25 liegt.

4. Verfahren nach Anspruch 3, wobei (B) weiterhin Einheiten umfaßt, die von 0,1 bis 10 Gew.-% wenigstens eines Stickstoff enthaltenden Vinylmonomers abgeleitet sind.

5. Verfahren nach Anspruch 1, wobei die Schmierölzusammensetzung weiterhin wenigstens ein Mitglied der Gruppe umfaßt, bestehend aus Fließpunkterniedrigern, Korrosionsinhibitoren, Druckübertragungsadditiven, Antiverschleißmitteln, Antioxidanzien, Detergenzien, aschefreien Dispergiermitteln, Reibungsmodifizierern und Antischaummitteln, und wobei das Öl mit schmierender Viskosität wenigstens ein aus der Gruppe, bestehend aus Mineralöl, synthetischem Öl oder Gemischen davon mit einer kinematischen Viskosität bei 100°C im Bereich von 4 bis 10 Zentistoke, ausgewähltes Mitglied umfaßt.

6. Verfahren nach Anspruch 1, wobei der Antrieb ein Automatikgetriebe ist und wobei das Verfahren umfaßt, daß man eine Schmierölzusammensetzung verwendet, umfassend eine große Menge eines Öls mit schmierender Viskosität und eine Gesamtmenge von 3 bis 10 Gew.-% einer Polymerzusammensetzung, welche folgendes umfaßt
(A) wenigstens ein Copolymer von Ethylen und aliphatischem Olefin, wobei die aliphatischen Olefine 3 bis 24 Kohlenstoffatome enthalten, wobei das Copolymer (A) Mₙ im Bereich von 600 bis 5000 hat,
(B) wenigstens ein Copolymer, umfassend Einheiten, die abgeleitet sind von
(a) 35 Mol-% bis 95 Mol-% Alkylmethacrylatestermonomeren mit 9 bis 25 Kohlenstoffatomen in der Estergruppe und
(b) 65 Mol-% bis 5 Mol-% Alkylmethacrylatestermonomeren mit 7 bis 12 Kohlenstoffatomen in der Estergruppe und wobei die Alkylreste der Estergruppen des Alkylmethacrylatestermonomers (b) 2-(C₁₋₄-Alkyl)-Substituenten haben,
wobei das Copolymer (B) Mₙ im Bereich von 10.000 bis 350.000 hat und wobei das Gewichtsverhältnis von (A):(B) im Bereich von 99:1 bis 1:99 liegt,
und geringe Mengen wenigstens eines Metalldithiophosphats, eines Dichtungsquellmittels, eines Fließpunkterniedrigers, eines aschefreien Dispergiermittels und eines Korrosionsinhibitors.

7. Verfahren nach Anspruch 1, wobei der Antrieb ein Getriebe ist und wobei das Verfahren umfaßt, daß man eine Schmierölzusammensetzung verwendet, umfassend eine große Menge eines Gruppe III-Öls und eine Gesamtmenge von 3 bis 30 Gew.-% einer Polymerzusammensetzung, welche folgendes umfaßt
(A) wenigstens ein Copolymer von Ethylen und aliphatischem Olefin, wobei die aliphatischen Olefine 3 bis 24 Kohlenstoffatome enthalten, wobei das Copolymer (A) Mₙ im Bereich von 600 bis 5000 hat, und
(B) wenigstens ein Copolymer, umfassend Einheiten, die abgeleitet sind von
(a) 35 Mol-% bis 95 Mol-% Alkylmethacrylatestermonomeren mit 9 bis 25 Kohlenstoffatomen in der Estergruppe und
(b) 65 Mol-% bis 5 Mol-% Alkylmethacrylatestermonomeren mit 7 bis 12 Kohlenstoffatomen in der Estergruppe und wobei die Alkylreste der Estergruppen des Alkylmethacrylatestermonomers (b) 2-(C₁₋₄-Alkyl)-Substituenten haben,
wobei das Copolymer (B) Mₙ im Bereich von 10.000 bis 350.000 hat und wobei das Gewichtsverhältnis von (A):(B) im Bereich von 99:1 bis 1:99 liegt,
und geringe Mengen von Druckübertragungsadditiven, Antiverschleißmitteln und Korrosionsinhibitoren.

## Revendications

1. Procédé de lubrification d'une transmission utilisant une composition d'huile lubrifiante comprenant une huile ayant une viscosité lubrifiante et un total de 1 à 50 % en poids de copolymères comprenant
(A) au moins un copolymère d'éthylène-oléfines aliphatiques, dans lequel les oléfines aliphatiques contiennent de 3 à 24 atomes de carbone, ledit copolymère (A) ayant une valeur de Mₙ comprise entre 600 et 5000 ; et
(B) au moins un copolymère comprenant des unités provenant de
(a) 35 % en moles à 95 % en moles de monomères esters méthacrylate d'alkyle contenant de 9 à 25 atomes de carbone dans le groupe ester et
(b) 65 % en moles à 5 % en moles de monomères esters méthacrylate d'alkyle contenant de 7 à 12 atomes de carbone dans le groupe ester, et les fragments alkyle des groupes esters des monomères esters méthacrylate d'alkyle (b) ayant des substituants 2-(alkyle en C₁ à C₄),
ledit copolymère (B) ayant une valeur de Mₙ comprise entre 10 000 et 350 000 ; et dans lequel le rapport en poids de (A):(B) est compris entre 99:1 et 1:99.

2. Procédé selon la revendication 1, dans lequel le monomère (b) comprend du méthacrylate de 2-éthylhexyle.

3. Procédé selon la revendication 1, dans lequel la teneur en éthylène du copolymère d'éthylène-oléfines aliphatiques (A) est comprise entre 30 % en moles à 85 % en moles et dans lequel le rapport en poids (A):(B) est compris entre 25:75 et 75:25.

4. Procédé selon la revendication 3, dans lequel (B) comprend en outre des unités provenant de 0,1 % à 10 % en poids d'au moins un monomère vinylique contenant de l'azote.

5. Procédé selon la revendication 1, dans lequel la composition d'huile lubrifiante comprend en outre au moins un élément choisi dans l'ensemble constitué d'agents abaissant le point d'écoulement, d'inhibiteurs de corrosion, d'additifs extrême pression, d'additifs anti-usure, d'antioxydants, de détergents, de dispersants sans cendres, d'agents de modification du frottement et d'agents antimousse, et dans lequel l'huile ayant une viscosité lubrifiante comprend au moins un élément choisi dans l'ensemble constitué d'une huile minérale, d'une huile synthétique ou de mélanges de celles-ci, ayant une viscosité cinématique de 4 à 10 centistokes à 100°C.

6. Procédé selon la revendication 1, dans lequel la transmission est une transmission automatique et ledit procédé comprend l'utilisation d'une composition d'huile lubrifiante comprenant une quantité principale d'une huile ayant une viscosité lubrifiante, un total de 3 % à 10 % en poids d'une composition polymère comprenant
(A) au moins un copolymère d'éthylène-oléfines aliphatiques, dans lequel les oléfines aliphatiques contiennent de 3 à 24 atomes de carbone, ledit copolymère (A) ayant une valeur de Mₙ comprise entre 600 et 5000 ; et
(B) au moins un copolymère comprenant des unités provenant de
(a) 35 % en moles à 95 % en moles de monomères esters méthacrylate d'alkyle contenant de 9 à 25 atomes de carbone dans le groupe ester et
(b) 65 % en moles à 5 % en moles de monomères esters méthacrylate d'alkyle contenant de 7 à 12 atomes de carbone dans le groupe ester, et les fragments alkyle des groupes esters des monomères esters méthacrylate d'alkyle (b) ayant des substituants 2-(alkyle en C₁ à C₄),
ledit copolymère (B) ayant une valeur de Mₙ comprise entre 10 000 et 350 000 ; et dans lequel le rapport en poids de (A):(B) est compris entre 99:1 et 1:99,
et des petites quantités d'au moins un dithiophosphate de métal, un agent de gonflement de joints d'étanchéité, un agent abaissant le point d'écoulement, un dispersant sans cendres et un inhibiteur de corrosion.

7. Procédé selon la revendication 1, dans lequel la transmission est un engrenage et ledit procédé comprend l'utilisation d'une composition d'huile lubrifiante comprenant une quantité principale d'une huile du Groupe III, un total de 3 % à 30 % en poids d'une composition polymère comprenant
(A) au moins un copolymère d'éthylène-oléfines aliphatiques, dans lequel les oléfines aliphatiques contiennent de 3 à 24 atomes de carbone, ledit copolymère (A) ayant une valeur de Mₙ comprise entre 600 et 5000 ; et
(B) au moins un copolymère comprenant des unités provenant de
(a) 35 % en moles à 95 % en moles de monomères esters méthacrylate d'alkyle contenant de 9 à 25 atomes de carbone dans le groupe ester et
(b) 65 % en moles à 5 % en moles de monomères esters méthacrylate d'alkyle contenant de 7 à 12 atomes de carbone dans le groupe ester, et les fragments alkyle des groupes esters des monomères esters méthacrylate d'alkyle (b) ayant des substituants 2-(alkyle en C₁ à C₄),
ledit copolymère (B) ayant une valeur de Mₙ comprise entre 10 000 et 350 000 ; et dans lequel le rapport en poids de (A):(B) est compris entre 99:1 et 1:99,
et des petites quantités d'additifs extrême pression, d'agents anti-usure et d'inhibiteurs de corrosion.
